# EUROPÄISCHE PATENTSCHRIFT

(11) **EP 1 250 583 B1**
(45) Veröffentlichungstag und Bekanntmachung des Hinweises auf die Patenterteilung: **19.07.2006**
(21) Anmeldenummer: 01903677.1
(22) Anmeldetag: 25.01.2001
(51) Int. Cl.: G01N 1/06

(54) **VERFAHREN ZUM ISOLIEREN EINES TEILS EINER SCHICHT BIOLOGISCHEN MATERIALS**
METHOD FOR ISOLATING A PORTION OF A LAYER OF A BIOLOGICAL MATERIAL
PROCEDE POUR ISOLER UNE PARTIE D'UNE COUCHE D'UN MATERIAU BIOLOGIQUE

(30) Priorität: 25.01.2000 DE 10003588
(43) Veröffentlichungstag der Anmeldung: 23.10.2002
(73) Patentinhaber: Molecular Machines & Industries GmbH, 85386 Eching (DE)
(72) Erfinder: LECLERC, Norbert, 07743 Jena (DE)
(74) Vertreter: Renken, Joachim
(86) Internationale Anmeldenummer: PCT/EP2001/000802
(87) Internationale Veröffentlichungsnummer: WO 2001/055693

(56) Entgegenhaltungen:
- WO-A-98/35216
- DE-A- 19 603 996
- DE-A- 19 818 425
- US-A- 5 998 129
- EMMERT-BUCK M R ET AL: "LASER CAPTURE MICRODISSECTION" SCIENCE,AMERICAN ASSOCIATION FOR THE ADVANCEMENT OF SCIENCE,,US, Bd. 274, Nr. 5289, 8. November 1996 (1996-11-08), Seiten 998-1001, XP000644727 ISSN: 0036-8075
- BONNER R F ET AL: "LASER CAPTURE MICRODISSECTION: MOLECULAR ANALYSIS OF TISSUE" SCIENCE,AMERICAN ASSOCIATION FOR THE ADVANCEMENT OF SCIENCE,,US, Bd. 278, 21. November 1997 (1997-11-21), Seiten 1481-1483, XP000941813 ISSN: 0036-8075

## Beschreibung

Die Erfindung betrifft ein Verfahren zum Isolieren eines Teils einer Schicht biologischen Materials.

Zur Aufklärung der molekularen Ursachen von Krankheiten werden sogenannte Genexpressionsstudien durchgeführt. Dabei wird versucht, die tatsächlich in einer Zelle exprimierten Gene zu bestimmen, da die zugehörigen Proteine für die krankhafte Entwicklung der Zellen verantwortlich sind. Eine Möglichkeit, die tatsächlich vorhandenen Proteine zu bestimmen, besteht darin, die in der Zelle synthetisierten m-RNA zu bestimmen, da aus ihnen die Proteine gebildet werden.

Die m-RNA ist jedoch ein sehr kurzlebiges Produkt der Zellen, weshalb die Konzentration an m-RNA in den Zellen sehr gering ist Will man die m-RNA z.B. einer Tumorzelle bestimmen, so muß daher eine möglichst große Zahl von Tumorzellen gesammelt werden. Die Tumorzellen müssen dazu aus krankem Gewebe isoliert werden. Dazu können die Tumorzellen beispielsweise aus Gewebeschnitten ausgeschnitten und isoliert gesammelt werden. Anschließend werden die isolierten Tumorzellen aufgeschlossen. Durch geeignete Aufreinigungsschritte wird die m-RNA aus den Zellen isoliert. Danach wird sie mittels der Reversen Transkriptase in c-DNA übersetzt. Diese wird mit idR linearer PCR amplifiziert. Die so gewonnene c-DNA wird z.B. mit Hilfe von geeigneten DNA-Chips qualitativ bzw. quantitativ analysiert.

In diesem Zusammenhang befasst sich die vorliegende Erfindung mit dem Isolieren bzw. Ausschneiden von zu untersuchenden Zellen. Dabei kommt es u.a. darauf an, äußerst sauber zu arbeiten, d.h. insbesondere RNAsen-frei zu arbeiten, da diese die m-RNA abbauen. Schon eine Berührung mit der bloßen Hand ist zu vermeiden.

Bei bekannten Verfahren zum Schneiden von Gewebe (z.B. American Journal of Pathology, Vol.151 (1997), Seiten 63-67) wird der Gewebeschnitt auf einem Objektträger präpariert. Mit Hilfe eines Lasers wird eine geschlossene Kurve um das kranke Gewebe beschrieben. Auf der Kurve wird das Gewebe ablafiert, wodurch das zu isolierende kranke Gewebe vom restlichen Gewebe getrennt ist. Das ausgeschnittene Gewebestück kann beispielsweise mit Hilfe einer Pipette abgesaugt werden. Nachteilig an den bekannten Verfahren ist, daß es sehr zeitaufwendig ist Um die für eine Analyse benötigte Menge an m-RNA zu sammeln, ist eine Person mehrere Tage mit dem Schneiden von Gewebe beschäftigt.

Ein verbessertes Verfahren ist in der DE 19616 216 A1 beschrieben (siehe auch Cell. Mol. Bio., Vol. 44 (1998) Seiten 735-746). Ein auf einem Objektträger präparierter Gewebeschnitt wird auf ein inverses oder aufrechtes Mikroskop gelegt. Über dem Gewebeschnitt auf dem Objektträger wird ein Verschlusselement eines verschließbaren Röhrchens (Tube) angeordnet. Die Unter- bzw. Innenseite des Verschlusselements ist mit Öl beschichtet Mittels Ablation durch einen UV-Laser werden Teile des Gewebes auf dem Objektträger ausgeschnitten. Die ausgeschnittenen Teile des Gewebes werden mittels eines UV-Lichtpulses vom Objektträger gelöst. Dabei treffen sie auf das mit Öl beschichtete Verschlusselement und haften am Öl. Das zeitaufwendige Absaugen mit einer Pipette entfällt somit. Nachteilig ist jedoch die schlecht kontrollierbare Bewegung des gelösten Gewebestücks. Dieses erreicht nicht immer das Verschlusselement. Außerdem wird durch den UV-Lichtpuls genau dasjenige Gewebe geschädigt, das untersucht werden soll.

Aufgabe der Erfindung ist es, ein Verfahren anzugeben, mit dessen Hilfe größere Mengen an Gewebe auf möglichst sterile Art und schnell gesammelt werden können.

Diese Aufgabe wird erfindungsgemäß durch ein Verfahren mit den Merkmalen des Anspruchs 1 gelöst.

Bei dem erfindungsgemäßen Verfahren zum Isolieren eines Teils einer Schicht biologischen Materials wird zunächst die Schicht biologischen Materials auf einer Seite einer Stabilisierungsschicht aufgebracht. Es wird ein Träger mit einer Haftvermittlungsschicht auf mindestens einer Seite des Trägers ausgebildet. Das Material der Haftvermittlungsschicht wird dabei derart gewählt, daß es Haftung zwischen der Stabilisierungsschicht und dem Träger vermitteln kann. Anschließend wird der Träger mit seiner Haftvermittlungsschicht von der der Schicht biologischen Materials abgewandten Seite der Stabilisierungsschicht mit der Stabilisierungsschicht in Kontakt gebracht. Danach beschreibt der Fokus eines Laserstrahls eine geschlossene Kurve um den zu isolierenden Teil der Schicht biologischen Materials und trägt das biologische Material sowie die Stabilisierungsschicht auf der Kurve ab. Dadurch wird der zu isolierende Teil vom Rest der Schicht biologischen Materials getrennt. Anschließend werden der Träger und diejenigen Teile der Stabilisierungsschicht getrennt, die nicht mit dem zu isolierenden Teil der Schicht biologischen Materials in Kontakt stehen. Der isolierte Teil haftet dann am Träger.

Alternativ kann zunächst der zu isolierende Teil vom Rest der Schicht biologischen Materials getrennt werden. Erst danach wird der Träger mit seiner Haftvermittlungsschicht von der der Schicht biologischen Materials abgewandten Seite der Stabilisierungsschicht mit der Stabilisierungsschicht in Kontakt gebracht. Danach werden wiederum der Träger und diejenigen Teile der Stabilisierungsschicht getrennt, die nicht mit dem zu isolierenden Teil der Schicht biologischen Materials in Kontakt stehen. Der isolierte Teil haftet dann wiederum am Träger.

Ferner muß der Fokus des Laserstrahls keine vollständig geschlossene Kurve um den zu isolierenden Teil der Schicht biologischen Materials beschreiben. Es genügt, wenn eine annähernd geschlossene Kurve beschrieben wird. Z.B. können ein oder mehrere Stege zwischen dem zu isolierenden Teil und dem Rest stehen gelassen werden, an denen der zu isolierende Teil gehalten wird. Beim Trennen des Träger und der nicht zu isolierenden Teile werden die Stege zerrissen und die zu isolierenden Teile herausgerissen. Sie haften dann wiederum wie gewünscht am Träger.

Die Schicht biologischen Materials kann z.B. ein Gewebeschnitt, ein Zellenausstrich oder ausgesäte Zellen sein.

Als Stabilisierungsschicht können z.B. Folien verwendet werden. Nach Durchführung des erfindungsgemäßen Verfahrens haftet der zu isolierende Teil des Schnitts, z.B. Tumorzellen, am Träger, während der Rest des Schnitts, z.B. gesundes Gewebe, weiterhin an der verbliebenen Stabilisierungsschicht haftet. Der zu isolierende Teil des Schnitts ist somit isoliert.

Ferner wird die Aufgabe durch ein Verfahren mit den Merkmalen des Anspruchs 2 gelöst.

Bei dem erfindungsgemäßen Verfahren zum Isolieren eines Teils einer Schicht biologischen Materials wird die Schicht biologischen Materials auf einer Seite einer Stabilisierungsschicht aufgebracht Die Stabilisierungsschicht wird mit der Schicht biologischen Materials frei tragend über einer Auffangvorrichtung positioniert, wobei ein Zwischenraum zwischen der Stabilisierungsschicht und der Auffangvorrichtung verbleibt. Anschließend beschreibt der Fokus eines Laserstrahls eine geschlossene Kurve um den zu isolierenden Teil der Schicht biologischen Materials und trägt das biologische Material sowie die Stabilisierungsschicht auf der Kurve ab. Dadurch wird der zu isolierende Teil vom Rest der Schicht biologischen Materials getrennt. Der zu isolierende Teil des biologischen Materials, z.B. die Tumorzellen, fällt direkt auf die Auffangvorrichtung und kann so auf einfache Weise isoliert und z.B. weiter transportiert werden.

Der Zwischenraum zwischen der Stabilisierungsschicht und der Auffangvorrichtung kann beispielsweise ein Luftspalt sein, er kann jedoch auch mit einem geeigneten Gas gefüllt oder mit Unterdruck beaufschlagt sein.

Der Zwischenraum zwischen der Stabilisierungsschicht und der Auffangvorrichtung kann auf einfache Weise dadurch erzeugt werden, daß als Auffangvorrichtung ein Objektträger mit einer Vertiefung verwendet wird und der zu isolierende Teil über der Vertiefung im Objektträger positioniert wird.

Alternativ kann der Zwischenraum zwischen der Stabilisierungsschicht und der Auffangvorrichtung dadurch erzeugt werden, daß Abstandshalter zwischen Stabilisierungsschicht und Auffangvorrichtung angeordnet werden.

IdR werden Gewebeproben erst in dünne Scheiben geschnitten, dann auf einen Objektträger aufgebracht und eventuell gefärbt, anschließend mit einem transparenten Eindeckmedium (Alkohol, Xylol) versehen und schließlich mit einem Deckglas abgedeckt. Ein solcherart präparierter Gewebeschnitt kann mit guter Abbildungsqualität unter einem Mikroskop betrachtet werden. Will man einzelne Abschnitte oder Zellen aus dem Gewebe ausschneiden (Mikrodissektion) und anderweitig weiterverarbeiten, so muß auf Eindeckmedium und Deckglas verzichtet werden. Die Folge davon ist eine dramatische Verschlechterung der Abbildungsqualität im Mikroskop, da das Licht nun aufgrund hoher Unterschiede der Brechungsindizes zwischen Probe, Luft und optischem System und aufgrund der rauhen Oberfläche der Probe stark gebrochen und gestreut wird.

Zwischen der Beleuchtungseinrichtung und der Probe kann ein Lichtdiffusor, z.B. eine Streuscheibe, Mattscheibe oder Mattglas, angeordnet werden. Es hat sich gezeigt, daß dies zu einer wesentlichen Verbesserung der Abbildungsqualität führt, so daß das Bild bei Einsatz eines Lichtdiffusors annähernd wieder die Qualität hat, wie bei Einsatz von Eindeckmedium und Deckglas.

Dazu kann ein Halteteil mit einem flachen Boden vorgesehen werden, der als Lichtdiffusor wirkt Über den Boden erhebt sich ein Rand. An der vom Boden abgewandten Seite des Rands schließt sich eine Handhabungsvorrichtung an, welche vom Boden weg nach außen gerichtet ist.

Die Handhabungsvorrichtung kann z.B. ein einfacher Griff oder eine Verbindung zu einem verschließbaren Röhrchen (Tube) sein.

Das Halteteil kann somit einerseits die isolierten Gewebeteile aufnehmen, andererseits als Lichtdiffusor wirken, und mittels der Handhabungsvorrichtung einfach manipuliert werden.

Vorteilhafterweise wird der Lichtdiffusor höchstens 2 mm von der Schicht biologischen Materials entfernt angeordnet. Daher hat der Boden des Verschlusselements im Bereich des Lichtdiffusors eine Dicke von höchstens 2 mm.

Wird das Halteteil von unten an die Schicht biologischen Materials herangeführt, so sollte der Rand an der von der Handhabungsvorrichtung abgewandten Seite zwischen 0,1 und 2 mm über den Boden überstehen. Auf diese Weise stellt sich der benötigte Zwischenraum automatisch ein. Eine solche Ausbildung des Bodens des Halteteils kann jedoch dort nicht eingesetzt werden, wo der Boden unmittelbar mit der Schicht biologischen Materials oder der Stabilisierungsschicht in Kontakt gebracht werden muß.

Um die isolierten Teile der Schicht biologischen Materials aufzufangen oder aufzunehmen, ist der Boden des Halteteils an der von der Handhabungsvorrichtung abgewandten Seite mit einer Haftvermittlungsschicht versehen.

Bei einer Weiterbildung der Erfindung ist das Halteteil über einen flexiblen Verbindungsstreifen einstückig mit einem verschließbaren Röhrchen (Tube) verbunden, dem es als Verschlusselement dient. Durch Schwenken mit dem flexiblen Verbindungsstreifen kann das Röhrchen verschlossen werden. Nach dem Auffangen oder Aufnehmen des Gewebes kann das Verschlusselement des Röhrchens schlicht zugeklappt werden. Der isolierte Gewebeabschnitt ist dann im sterilen Röhrchen eingeschlossen.

Ein solches Röhrchen kann in einfacher Weise unter die Probe geschwenkt werden bzw. aus dem Licht und/oder Manipulationsweg herausgeschwenkt werden. Dadurch kann der Gewebeschnitt weiterhin für sonstige Manipulationen erreicht werden, z.B. für eine mechanische Abnahme der Probe.

Das Halteteil kann als Auffangvorrichtung bzw. Träger zum Aufnehmen der isolierten Gewebeteile verwendet werden.

Mit dem erfindungsgemäßen Verfahren können auch viele kleine, teils einzelne Tumorzellen in einem Gewebeschnitt in einem gemeinsamen Arbeitsschritt isoliert und mit einer gemeinsamen Auffangvorrichtung gesammelt werden.

Weitere vorteilhafte Weiterbildungen der Erfindungen sind in den Unteransprüchen gekennzeichnet

Im folgenden wird die Erfindung anhand von Ausführungsbeispielen näher erläutert, die in den (nicht maßstabsgerechten) Figuren schematisch dargestellt sind. Gleiche Bezugsziffem in den einzelnen Figuren bezeichnen dabei gleiche Elemente. Im einzelnen zeigt
- Fig. 1: eine schematische Darstellung eines Verfahrens zum Isolieren eines Teils einer Schicht biologischen Materials;
- Fig. 2: eine schematische Darstellung eines alternativen Verfahrens zum Isolieren eines Teils einer Schicht biologischen Materials;
- Fig. 3: eine schematische Darstellung eines weiteren alternativen Verfahrens zum Isolieren eines Teils einer Schicht biologischen Materials; und
- Fig. 4: eine schematische Darstellung eines weiteren alternativen Verfahrens zum Isolieren eines Teils einer Schicht biologischen Materials.

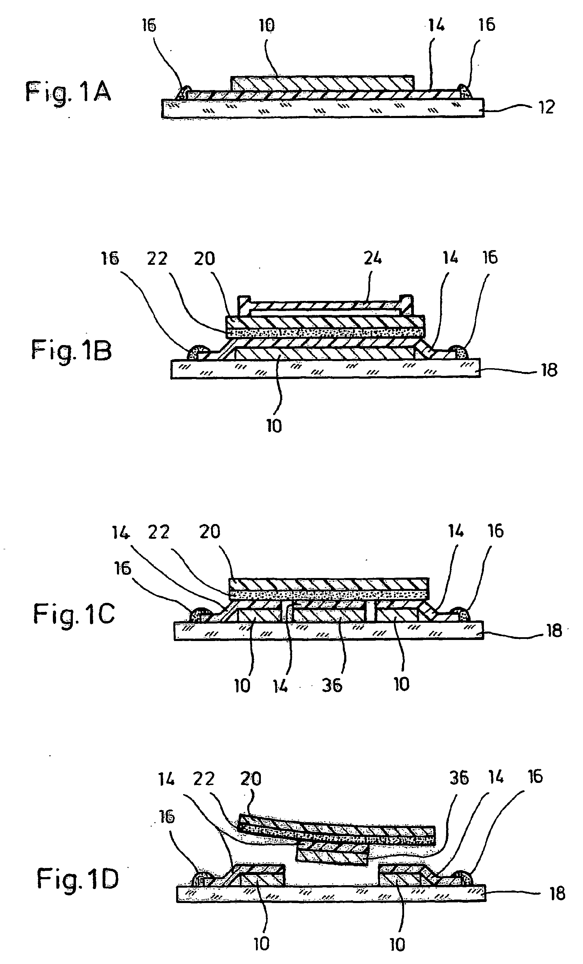

Im Folgenden wird auf Fig.1A) Bezug genommen.

In Paraffin eingebettetes oder gefrorenes Gewebe wird durch einen Hobel in dünne Gewebeschnitte 10 zerlegt. Diese rollen sich idR auf.

Ein Mikroskop-Objektträger 12 wird mit Alkohol besprüht. Ein wenige Quadratzentimeter großes Stück einer Folie 14, welches auf einer Papierschicht aufgetragen ist, wird auf die mit Alkohol besprühte Fläche des Mikroskop-Objektträgers 12 aufgebracht. Die Folie 14 besteht z.B. aus 2 µm dickem, UV absorbierendem PET oder PEN. Das Papier wird anschließend entfernt. Die Folie 14 wird durch einen Kleber 16, z.B. einen Montagekleber, an ihrem Rand auf dem Mikroskop-Objektträger 12 fixiert.

Anschließend wird der aufgerollte Gewebeschnitt 10 auf die Folie 14 gebracht. Der Mikroskop-Objektträger 12 mit Folie 14 und Gewebeschnitt 10 wird auf 60° Celsius erhitzt, wodurch das Paraffin schmilzt und sich der Gewebeschnitt 10 ausrollt.

### Verfahren 1:

Im Folgenden wird auf Fig. 1B) Bezug genommen. Bei dem gegenwärtig bevorzugten Ausführungsbeispiel wird anschließend die Folie 14 mit dem Gewebeschnitt 10 vom Mikroskop-Objektträger 12 abgenommen und mit dem Gewebeschnitt 10 nach unten auf einen zweiten Mikroskop-Objektträger 18 gelegt Auf diesem zweiten Mikroskop-Objektträger 18 wird die Folie 14 wiederum durch einen Kleber 16 an ihrem Rand fixiert. Anschließend wird der zweite Mikroskop-Objektträger 18 in die Objektebene eines inversen Mikroskops gelegt.

Bei einem Ausführungsbeispiel kann ein Klebeband 20 mit einem auf der Unterseite angeordneten Haftmittel 22 auf der Folie 14 und damit über dem Gewebeschnitt 10 positioniert werden. Statt des Klebebands 20, 22 können auch sonstige Haftfolien verwendet werden, z.B. solche aus der Halbleiterindustrie, die als Haftmittel 22 z.B. Silikonharz verwenden. Auf das Klebeband 20 wird ein Lichtdiffusor 24 gelegt. Anschließend wird das Gewebe durch eine Beleuchtungseinrichtung von oben beleuchtet. Möglich ist auch, daß das Klebeband 20 selbst als Lichtdiffusor wirkt

Im Folgenden wird auf Fig. 1C) Bezug genommen. Anschließend wird das zu isolierende Gewebe 36 im inversen Mikroskop durch den fokussierten Strahl z.B. eines Stickstofflasers mit einer Wellenlänge von 337 nm und einer Leistungsdichte von ca. 10⁸ bis 10⁹ W / cm² ausgeschnitten. Dabei wird auch die UV-absorbierende Folie 14 durchtrennt. Danach wird der Lichtdiffusor entfernt.

Im Folgenden wird auf Fig. 1D) Bezug genommen. Danach wird das Klebeband 20 aus dem Mikroskop entfernt. Dabei haften die ausgeschnittenen Gewebestücke 36 am Klebeband 20. Der Rest der Folie 14 und des Gewebeschnitts 10 ist durch den Kleber 16 an den zweiten Mikroskop-Objektträger 18 fixiert und bleibt an diesem haften.

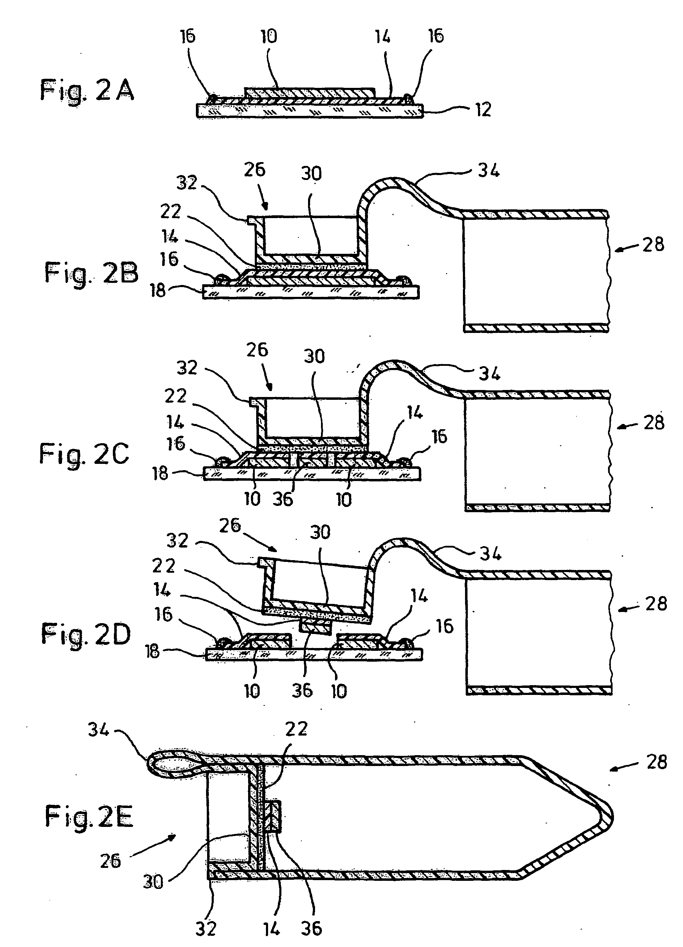

Im Folgenden wird auf Fig. 2A) und Fig. 2B) Bezug genommen. Bei dem gegenwärtig bevorzugten Ausführungsbeispiel wird jedoch das Verschlusselement 26 eines verschließbaren Plastikröhrchens (Tube) 28 auf einer Seite mit einem Haftmittel 22, z.B. Silikonharz belegt. Dazu wird diejenige Seite des Verschlusselements 26 gewählt, die mit dem Innenraum des Röhrchens (Tubes) im Kontakt steht, wenn das Röhrchen (Tube) durch das Verschlusselement verschlossen ist.

Dieses Verschlusselement 26 hat einen flachen Boden 30, der aus einem lichtstreuenden Material besteht. Über dem Boden 30 erhebt sich ein umlaufender Rand 32. Der Rand 32 ist über einen flexiblen Verbindungsstreifen 34 einstückig mit dem Röhrchen (Tube) 28 verbunden. Durch Schwenken des Verschlusselements 26 mit dem flexiblen Verbindungsstreifen 34 kann das Röhrchen 28 verschlossen werden. Das Verschlusselement 26 wird mit dem Haftmittel 22 nach unten über der Folie 14 und damit über dem Gewebeschnitt 10 angeordnet. Das Gewebe 10 wird durch eine Beleuchtungseinrichtung von oben durch das lichtstreuende Verschlusselement 26 beleuchtet.

Im Folgenden wird auf Fig. 2C) Bezug genommen. Anschließend wird das zu isolierende Gewebe 36 im inversen Mikroskop durch den fokussierten Strahl z.B. eines Stickstofflasers mit einer Wellenlänge von 337 nm und einer Leistungsdichte von ca. 10⁸ bis 10⁹ W / cm² ausgeschnitten. Dabei wird auch die UV-absorbierende Folie 14 durchtrennt.

Im Folgenden wird auf Fig. 2D) Bezug genommen. Danach wird das Verschlusselement 26 aus dem Mikroskop entfernt. Dabei haften die ausgeschnittenen Gewebestücke 36 am Boden 30 des Verschlusselements 26. Der Rest der Stabilisierungsschicht 14 und des Gewebeschnitts 10 ist durch den Kleber 16 an den zweiten Mikroskop-Objektträger 18 fixiert und bleibt an diesem haften.

Im Folgenden wird auf Fig. 2E) Bezug genommen. Das Plastikröhrchen 28 wird durch das Verschlusselement 26 verschlossen. Dadurch befindet sich das ausgeschnittene Gewebestück 36 im sterilen Raum des Röhrchens 28. Es ist somit auf hochreine Art isoliert worden.

### Verfahren 2:

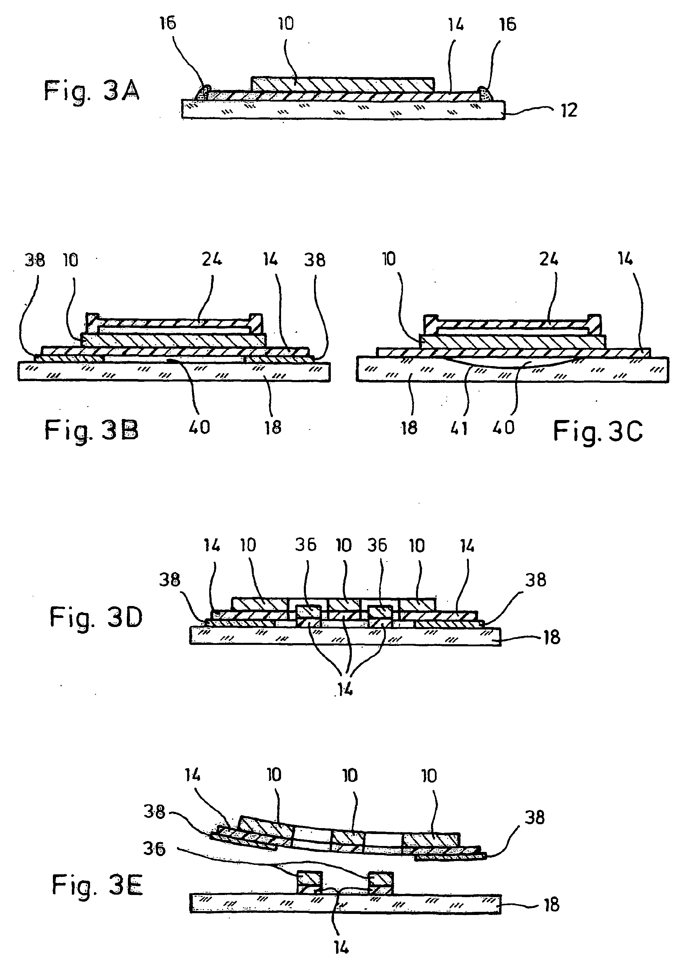

Im Folgenden wird auf Fig. 3A) und Fig. 3B) Bezug genommen. Bei einem alternativen Verfahren wird die Folie 14 mit dem Gewebeschnitt 10 vom Mikroskop-Objektträger 12 abgenommen und mit dem Gewebeschnitt 10 nach unten oder oben auf einen zweiten Mikroskop-Objektträger 18 gelegt. Dabei sind auf dem zweiten Mikroskop-Objektträger ca. 0,1 mm hohe Abstandshalter 38 angeordnet. Dadurch entsteht unter der Folie 14 mit dem Gewebeschnitt 10 ein Luftspalt 40.

Im Folgenden wird auf Fig. 3C) Bezug genommen. Alternativ kann der Zwischenraum 40 zwischen Folie 14 und zweitem Objektträger 18 statt durch Abstandshalter 38 auch durch eine konkave Vertiefung 41 im zweiten Objektträger 18 erzeugt werden.

Der solcherart präparierte zweite Objektträger 18 wird in die Objektebene eines inversen Mikroskops gebracht. In den oberhalb verlaufenden Beleuchtungspfad des inversen Mikroskops wird der Diffusor 24 eingebracht. Er wird ca. 0,1 bis 0,2 mm oberhalb der Probe 10 positioniert.

Im Folgenden wird auf Fig. 3D) Bezug genommen. Anschließend wird das zu isolierende Gewebe 36 durch einen fokussierten UV Laserstrahl ausgeschnitten. Dabei wird auch die UV-absorbierende Folie 14 durchtrennt. Der zu isolierende Teil 36 des biologischen Materials fällt daher auf den zweiten Objektträger 18 und kann so auf einfache Weise weiter transportiert werden (siehe Fig. 3E).

### Verfahren 3:

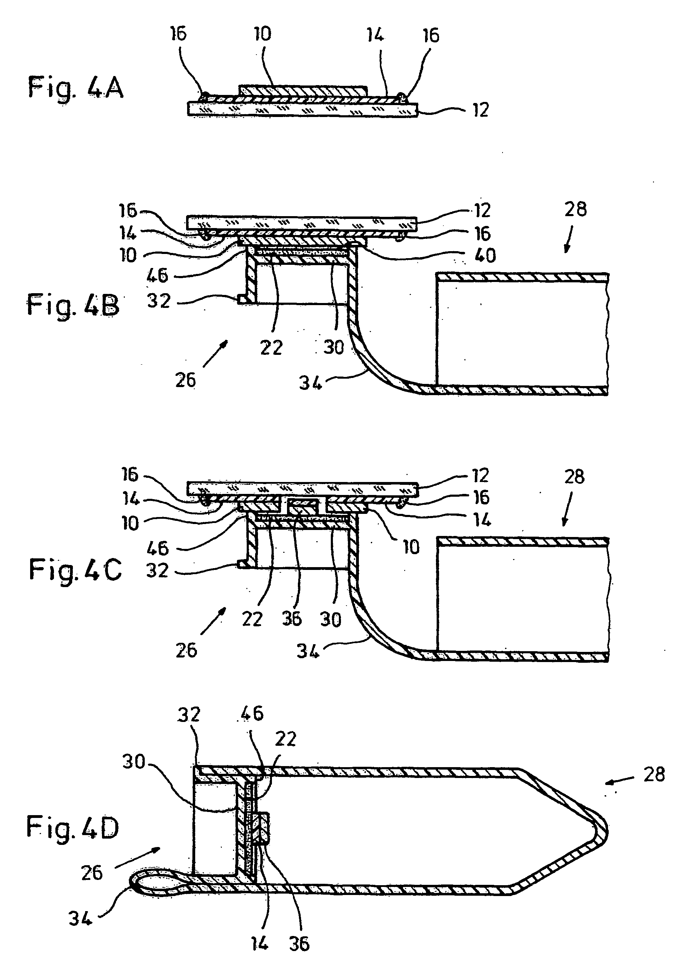

Im Folgenden wird auf Fig. 4A) und Fig. 4B) Bezug genommen. Bei einem weiteren alternativen Verfahren wird der Mikroskop-Objektträger 12 mit der Folie 14 und dem Gewebeschnitt 10 nach unten in die Objektebene eines aufrechten Mikroskops gebracht

Bei diesem Ausführungsbeispiel wird das Verschlusselement 26 eines verschließbaren Plastikröhrchens (Tube) 28 mit einem Haftmittel 22, z.B. Silikonharz, belegt. Das Verschlusselement 26 des Tubes 28 wird unterhalb der Probe 10 positioniert. Das Verschlusselement 26 hat einen flachen Boden 30. An der der Probe 10 zugewandten Seite des Verschlusselements 26 erhebt sich ein umlaufender Rand 46 ca. 0,1 bis 2 mm über den Boden 30. Auf der gegenüberliegenden Seite des Bodens 30 erhebt sich ein weiterer Rand 32. Dieser zweite Rand 32 ist über einen flexiblen Verbindungsstreifen 34 einstückig mit dem Röhrchen (Tube) 28 verbunden. Durch Schwenken des Verschlusselements 26 mit dem flexiblen Verbindungsstreifen 34 kann das Röhrchen 28 verschlossen werden.

Das Verschlusselement 26 wird mit dem Haftmittel 22 nach oben unter der Probe 10 positioniert. Das Gewebe 10 wird durch eine Beleuchtungseinrichtung von unten durch das als Lichtdiffusor wirkende Verschlusselement 26 beleuchtet.

Im Folgenden wird auf Fig. 4C) Bezug genommen. Anschließend wird wiederum das zu isolierende Gewebe 36 durch den von oben eingestrahlten, fokussierten Strahl z.B. eines Stickstofflasers mit einer Wellenlänge von 337 nm und einer Leistungsdichte von ca. 10⁸ bis 10⁹ W / cm² ausgeschnitten. Dabei wird auch die UV-absorbierende Folie 14 durchtrennt.

Der zu isolierende Teil 36 des biologischen Materials fällt daher auf das Verschlusselement 26. Das Plastikröhrchen 28 wird durch das Verschlusselement 26 verschlossen (siehe Fig. 4D). Dadurch befindet sich das ausgeschnittene Gewebestück 36 im sterilen Raum des Röhrchens 28. Es ist somit auf hochreine Art isoliert worden.

### Bezugszeichenliste

- 10: Gewebeschnitt
- 12: Mikroskop-Objektträger.
- 14: Folie
- 16: Kleber
- 18: zweiter Mikroskop-Objektträger
- 20: Klebeband
- 22: Haftmittel
- 24: Lichtdiffusor
- 26: Verschlusselement
- 28: verschließbares Plastikröhrchen (Tube)
- 30: Boden
- 32: Rand des Verschlusselements 26
- 34: flexibles Verbindungselement
- 36: zu isolierendes Gewebe
- 38: Abstandshalter
- 40: Luftspalt
- 41: konkave Vertiefung
- 46: Rand

## Patentansprüche

1. Verfahren zum Isolieren eines Teils (36) einer Schicht (10) biologischen Materials,
wobei die Schicht (10) biologischen Materials auf einer Seite einer Stabilisierungsschicht (14) aufgebracht wird;
wobei ein Träger (20) mit einer Haftvermittlungsschicht (22) auf mindestens einer Seite des Trägers ausgebildet wird, und wobei das Material der Haftvermittlungsschicht derart gewählt wird, daß es Haftung zwischen der Stabilisierungsschicht (14) und dem Träger (20) vermitteln kann;
wobei der Träger (20) mit seiner Haftvermittlungsschicht (22) von der der Schicht (10) biologischen Materials abgewandten Seite der Stabilisierungsschicht (14) mit der Stabilisierungsschicht in Kontakt gebracht wird;
wobei der Fokus eines Laserstrahls eine geschlossene oder annähernd geschlossene Kurve um den zu isolierenden Teil (36) der Schicht (10) biologischen Materials beschreibt und das biologische Material sowie die Stabilisierungsschicht (14) auf der Kurve abträgt; und
wonach der Träger (20) und diejenigen Teile der Stabilisierungsschicht (14) getrennt werden, die nicht mit dem zu isolierenden Teil (36) der Schicht (10) biologischen Materials in Kontakt stehen.

2. Verfahren zum Isolieren eines Teils (36) einer Schicht (10) biologischen Materials,
wobei die Schicht (10) biologischen Materials auf einer Seite einer Stabilisierungsschicht (14) aufgebracht wird;
wobei die Stabilisierungsschicht (14) mit der Schicht (10) biologischen Materials frei tragend über einer Auffangvorrichtung (18, 26) positioniert wird, wobei ein Zwischenraum (40) zwischen der Stabilisierungsschicht und der Auffangvorrichtung verbleibt;
wonach der Fokus eines Laserstrahls eine geschlossene Kurve um den zu isolierenden Teil (36) der Schicht (10) biologischen Materials beschreibt und das biologische Material sowie die Stabilisierungsschicht (14) auf der Kurve abträgt, wodurch der zu isolierende Teil (36) vom Rest der Schicht (10) biologischen Materials getrennt wird; und
wonach der zu isolierende Teil (36) auf die Auffangvorrichtung (18, 26) fällt und von dieser aufgefangen wird.

3. Verfahren nach Anspruch 2, **dadurch gekennzeichnet,**
**daß** als Auffangvorrichtung ein Objektträger (18) mit einer Vertiefung verwendet wird; und
**daß** der zu isolierende Teil (36) über der Vertiefung (41) im Objektträger (18) positioniert wird.

4. Verfahren nach Anspruch 2, **dadurch gekennzeichnet, daß** der Zwischenraum (40) zwischen der Stabilisierungsschicht (14) und der Auffangvorrichtung (18, 26) **dadurch** erzeugt wird, daß Abstandshalter (38) zwischen Stabilisierungsschicht und Auffangvorrichtung angeordnet werden.

5. Verfahren nach Anspruch 1, **dadurch gekennzeichnet, daß** als Träger (20) ein Halteteil (26) verwendet wird
mit einem flachen Boden (30), der als Lichtdiffusor wirkt;
mit einem sich über den Boden (30) erhebenden Rand (32); und
mit einer sich an der vom Boden (30) abgewandten Seite des Rands (32) anschließenden Handhabungsvorrichtung (34), welche vom Boden weg nach außen gerichtet ist

6. Verfahren nach Anspruch 2, **dadurch gekennzeichnet, daß** als Auffangvorrichtung (18) ein Halteteil (26) verwendet wird
mit einem flachen Boden (30), der als Lichtdiffusor wirkt;
mit einem sich über den Boden (30) erhebenden Rand (32); und
mit einer sich an der vom Boden (30) abgewandten Seite des Rands (32) anschlie-ßenden Handhabungsvorrichtung (34), welche vom Boden weg nach außen gerichtet ist

7. Verfahren nach Anspruch 6, **dadurch gekennzeichnet, daß** ein Halteteil (26) verwendet wird, dessen Rand an der von der Handhabungsvorrichtung abgewandten Seite zwischen 0,1 und 2 mm über den Boden übersteht.

8. Verfahren nach einem der Ansprüche 5 bis 7, **dadurch gekennzeichnet, daß** ein Halteteil (26) verwendet wird, dessen Boden (30) im Bereich des Lichtdiffusors eine Dicke von höchstens 2 mm hat.

9. Verfahren nach einem der Ansprüche 5 bis 7, **dadurch gekennzeichnet, daß** ein Halteteil (26) verwendet wird, dessen Boden (30) an der von der Handhabungsvorrichtung (34) abgewandten Seite mit einer Haftvermittlungsschicht (22) versehen ist

10. Verfahren nach einem der Ansprüche 5 bis 7, **dadurch gekennzeichnet, daß** das Halteteil über einen flexiblen Verbindungsstreifen (34) einstückig mit einem verschließbaren Röhrchen (Tube) (28) verbunden ist, dem der Verbindungsstreifen als Verschlusselement (26) dient, indem der Verbindungsstreifen durch Schwenken mit dem flexiblen Verbindungsstreifen das Röhrchen verschließen kann.

## Claims

1. Method for isolating a portion (36) of a layer (10) of biological material,
wherein the layer (10) of biological material is applied to one side of a stabilising layer (14);
wherein a substrate (20) is formed with an adhesion-promoting layer (22) on at least one side of the substrate, and wherein the material of the adhesion-promoting layer is selected such that it can promote adhesion between the stabilising layer (14) and the substrate (20);
wherein the substrate (20) with its adhesion-promoting layer (22) is brought into contact with the stabilising layer (14) from the side of the stabilising layer facing away from the layer (10) of biological material;
wherein the focus of a laser beam describes a closed or nearly closed curve round the portion (36) of the layer (10) of biological material which is to be isolated, and strips the biological material as well as the stabilising layer (14) on the curve; and
whereupon the substrate (20) and the portions of the stabilising layer (14) which are not in contact with the portion (36) of the layer (10) of biological material which is to be isolated, are separated.

2. Method for isolating a portion (36) of a layer (10) of biological material,
wherein the layer (10) of biological material is applied to one side of a stabilising layer (14);
wherein the stabilising layer (14) with the layer (10) of biological material is positioned in overhanging relationship over a collecting device (18, 26),
wherein a gap (40) remains between the stabilising layer and the collecting device;
whereupon the focus of a laser beam describes a closed curve round the portion (36) of the layer (10) of biological material which is to be isolated, and strips the biological material and the stabilising layer (14) on the curve, as a result of which the portion (36) to be isolated is separated from the remainder of the layer (10) of biological material; and
whereupon the portion (36) to be isolated drops onto the collecting device (18, 26) and is collected thereby.

3. Method according to claim 2, **characterised in that**
a microscope slide (18) with a depression is used as the collecting device; and
**in that** the portion (36) to be isolated is positioned over the depression (41) in the microscope slide (18).

4. Method according to claim 2, **characterised in that** the gap (40) between the stabilising layer (14) and the collecting device (18, 26) is produced by arranging spacers (38) between stabilising layer and collecting device.

5. Method according to claim 1, **characterised in that** a holding portion (26) is used as the substrate, with a flat bottom (30) which acts as a light diffuser;
with an edge (32) rising above the bottom (30); and
with a handling device (34) which adjoins the side of the edge (32) facing away from the bottom (30) and which is directed outwards away from the bottom.

6. Method according to claim 2, **characterised in that** a holding portion (26) is used as the collecting device (18),
with a flat bottom (30) which acts as a light diffuser;
with an edge (32) rising above the bottom (30); and
with a handling device (34) which adjoins the side of the edge (32) facing away from the bottom (30) and which is directed outwards away from the bottom.

7. Method according to claim 6, **characterised in that** a holding portion (26) is used, whose edge protrudes between 0.1 and 2 mm above the bottom on the side facing away from the handling device.

8. Method according to any of claims 5 to 7, **characterised in that** a holding portion (26) is used, whose bottom (30) has a thickness of not more than 2 mm in the region of the light diffuser.

9. Method according to any of claims 5 to 7, **characterised in that** a holding portion (26) is used, whose bottom (30) is provided with an adhesion-promoting layer (22) on the side facing away from the handling device (34).

10. Method according to any of claims 5 to 7, **characterised in that** the holding portion is integrally connected by a flexible connecting strip (34) to a closable tube (28) for which the connecting strip serves as a closure element (26), by the fact that the connecting strip can close the tube by pivoting with the flexible connecting strip.

## Revendications

1. Procédé d'isolation d'une partie (36) d'une couche (10) de matériau biologique,
la couche (10) de matériau biologique étant appliquée sur une face d'une couche de stabilisation (14) ;
un support (20) étant réalisé avec une couche d'adhésion (22) sur au moins une face du support, et le matériau de la couche d'adhésion étant choisi de manière qu'il puisse communiquer une adhésion entre la couche de stabilisation (14) et le support (20) ;
le support (20), avec sa couche d'adhésion (22), est mis en contact, depuis la face, opposée à la couche (10) de matériau biologique, de la couche de stabilisation (14), avec la couche de stabilisation ;
le foyer d'un rayon laser décrit une courbe, fermée ou à peu près fermée, autour de la partie (36) à isoler de la couche (10) de matériau biologique et procède à l'enlèvement du matériau biologique, ainsi que de la couche de stabilisation (14) sur la courbe ; et
suite à quoi le support (20) et les parties de la couche de stabilisation 14), qui ne sont pas en contact avec la partie (36) à isoler de la couche (10) de matériau biologique, sont séparés.

2. Procédé d'isolation d'une partie (36) d'une couche (10) de matériau biologique,
la couche (10) de matériau biologique étant appliquée sur une face d'une couche de stabilisation (14) ;
la couche de stabilisation (14) avec la couche de matériau biologique est positionnée de façon en porte-à-faux sur un dispositif de captage (18, 26), un espace intermédiaire (40) subsistant entre la couche de stabilisation et le dispositif de captage ;
suite à quoi le foyer d'un rayon laser décrit une courbe fermée autour de la partie (36) à isoler de la couche (10) de matériau biologique et enlève le matériau biologique ainsi que de la couche de stabilisation (14) sur la courbe, faisant que la partie (36) à isoler est séparée du reste de la couche (10) de matériau biologique ; et
suite à quoi la partie (36) à isoler tombe sur le dispositif de captage (18, 26) et est captée par celui-ci.

3. Procédé selon la revendication 2, **caractérisé en ce qu'**on utilise comme dispositif de captage un support d'objets (18) avec une cavité ; et
**en ce que** la partie (36) à isoler est positionnée sur la cavité (41) ménagée dans le support d'objets (18).

4. Procédé selon la revendication 2, **caractérisé en ce que** l'espace intermédiaire (40), entre la couche de stabilisation (14) et le dispositif de captage (18, 26), est produit par le fait que le support d'espacement (38) est disposé entre la couche de stabilisation et le dispositif de captage.

5. Procédé selon la revendication 1, **caractérisé en ce qu'**on utilise une partie de maintien (26) comme support (20) ;
avec un fond (30) plat agissant comme diffuseur de lumière ;
avec un bord (32) en relief au-dessus du fond (30) ; et
avec un dispositif de manipulation (34), se raccordant à la face, opposée au fond (30), du bord (32) et tourné en s'écartant vers l'extérieur depuis le fond.

6. Procédé selon la revendication 2, **caractérisé en ce qu'**on utilise une partie de maintien (26) comme dispositif de captage (18) ;
avec un fond (30) plat agissant comme diffuseur de lumière ;
avec un bord (32) en relief au-dessus du fond (30) ; et
avec un dispositif de manipulation (34), se raccordant à la face, opposée au fond (30), du bord (32) et tourné en s'écartant vers l'extérieur depuis le fond.

7. Procédé selon la revendication 6, **caractérisé en ce qu'**on utilise une partie de maintien (26), dont le bord fait saillie du fond, d'une distance entre 0,1 et 2 mm, sur la face opposée au dispositif de manipulation.

8. Procédé selon l'une des revendications 5 à 7, **caractérisé en ce qu'**on utilise une partie de maintien (26), dont le fond (30) a, dans la zone du diffuseur de lumière, une épaisseur maximale de 2 mm.

9. Procédé selon l'une des revendications 5 à 7, **caractérisé en ce qu'**on utilise une partie de maintien (26); dont le fond (30) est muni sur la face, opposée au dispositif de manipulation (34), d'une couche d'adhésion (22).

10. Procédé selon l'une des revendications 5 à 7, **caractérisé en ce que** la partie de maintien est reliée par l'intermédiaire d'une bande de liaison (34) flexible, d'une seule pièce, à un petit tube (tube) (28), auquel la bande de liaison sert d'élément de fermeture (26), **en ce que** la bande de liaison peut fermer le petit tube, par pivotement avec la bande de liaison flexible.
